**Europäisches Patentamt**

**European Patent Office**

**Office européen des brevets**

(11) Numéro de publication : **0 349 408 B1**

(19)

(12) **FASCICULE DE BREVET EUROPEEN**

(45) Date de publication du fascicule du brevet :
**16.12.92 Bulletin 92/51**

(51) Int. Cl.⁵ : **G21C 3/34**

(21) Numéro de dépôt : **89401811.8**

(22) Date de dépôt : **26.06.89**

(54) Grille mélangeuse à ailettes pour assemblage combustible nucléaire.

(30) Priorité : **29.06.88 FR 8808759**

(43) Date de publication de la demande :
**03.01.90 Bulletin 90/01**

(45) Mention de la délivrance du brevet :
**16.12.92 Bulletin 92/51**

(84) Etats contractants désignés :
**BE DE SE**

(56) Documents cités :
**EP-A- 0 239 441**
**EP-A- 0 260 601**
**FR-A- 1 469 071**
**FR-A- 2 145 676**
**GB-A- 1 133 177**

(73) Titulaire : **FRAMATOME**
**Tour Fiat 1, Place de la Coupole**
**F-92400 Courbevoie (FR)**
Titulaire : **COMPAGNIE GENERALE DES**
**MATIERES NUCLEAIRES (COGEMA)**
**2, rue Paul Dautier B.P. 4**
**F-78141 Vélizy-Villacoublay (FR)**

(72) Inventeur : **Noailly, Jean**
**18, rue de Tourvieille**
**F-69005 Lyon (FR)**

(74) Mandataire : **Fort, Jacques**
**CABINET PLASSERAUD 84, rue d'Amsterdam**
**F-75009 Paris (FR)**

## Description

L'invention concerne les grilles à ailettes pour assemblage combustible nucléaire ayant un faisceau de crayons de combustible, grilles du type comportant plusieurs lits successifs constitués chacun de plaquettes parallèles, les plaquettes d'un lit étant croisées avec celles du lit suivant pour définir des passages de maintien des crayons aux noeuds d'un réseau régulier et toutes les plaquettes de la grille étant solidaires d'un même cadre.

On connaît déjà (EP-A-0 239 441) des grilles du type ci-dessus défini dans lesquelles toutes les plaquettes de même orientation sont regroupées dans un même lit. Cette solution permet de maintenir axialement les crayons à condition de munir certaines au moins des plaquettes de moyens élastiques exerçant sur les crayons une force transversale d'application sur une autre plaquette du même lit. Les ailettes provoquent un mélange des filets fluides et donc un effet de brassage qui tend à homogénéiser la température du réfrigérant et donne donc à la grille une fonction thermo-hydraulique.

On a par ailleurs déjà proposé des assemblages combustibles dans lesquels le supportage des crayons, c'est-à-dire leur maintien axial, est assuré par certaines seulement des grilles, les autres n'ayant qu'une fonction de mélange et/ou de maintien transversal. Le document EP-A-187 578 décrit un tel assemblage, ayant au moins une grille haute de supportage des crayons et d'autres grilles, placées plus bas, n'ayant qu'une fonction d'entretoisement. On a également proposé des assemblages comportant des grilles ayant essentiellement une fonction thermo-hydraulique interposées entre des grilles de supportage, dans la partie haute d'un assemblage, c'est-à-dire dans la partie où le réfrigérant est à la température la plus élevée.

La présente invention vise à fournir une grille à ailettes mélangeuses répondant mieux que celles antérieurement connues aux exigences de la pratique, notamment en ce qu'elle représente un meilleur compromis entre l'homogénéisation des températures, l'entretoisement des crayons et la perte de charge.

Dans ce but l'invention propose notamment une grille du type ci-dessus défini, destinée à n'assurer que des fonctions thermo-hydraulique et d'entretoisement, dont les plaquettes de même direction sont réparties en plusieurs lits successifs, les ailettes des plaquettes placées en amont du milieu de la grille étant orientées de façon à dévier l'écoulement de réfrigérant vers l'intérieur tandis que les ailettes des plaquettes placées en aval du milieu de la grille sont orientées de façon à dévier l'écoulement vers l'extérieur.

Grâce à cette disposition, le mélange est favorisé dans la partie centrale de l'assemblage, qui est la plus chaude, et il y a brassage du réfrigérant sur une longueur d'assemblage plus importante que dans les grilles traditionnelles, du fait de l'encombrement longitudinal accru de la grille. De plus, la grille accélère la circulation du réfrigérant le long des crayons placés au centre, ce qui facilite l'évacuation de la chaleur et augmente la valeur du flux critique.

On sera souvent amené à donner aux lits de plaquettes une disposition symétrique par rapport au plan médian de la grille, bien que cette disposition ne soit pas impérative. Cette solution conduira dans le cas d'un assemblage à pas carré comportant n x n cellules à une grille à 4(n+1) plaquettes, les plaquettes terminales pouvant être constituées par les extrémités du cadre. Des plaquettes centrales peuvent cependant être supprimées dans le cas où un tube d'instrumentation est placé dans l'axe. Bien que l'invention s'applique particulièrement bien aux assemblages dans lesquels les crayons sont répartis suivant un réseau carré, elle est également applicable aux assemblages à réseau triangulaire.

En règle générale, les plaquettes de deux lits successifs d'orientation différente seront directement jointives ou présenteront un emboîtement augmentant la rigidité. Le cadre sera souvent constitué de plaques évidées localement et présentant également des brèches d'angle, le cadre restant continu au niveau des lits les plus en amont et en aval pour limiter les risques d'accrochage entre grilles d'assemblages adjacents lors de la mise en place d'un assemblage.

L'invention sera mieux comprise à la lecture de la description qui suit de modes particuliers de réalisation, donnés à titre d'exemple non limitatifs. La description se réfère aux dessins qui l'accompagnent dans lesquels :
- la figure 1 est un schéma en élévation d'un assemblage combustible auquel l'invention est applicable ;
- la figure 2 est une représentation schématique, en perspective, d'une grille pour assemblage comportant 5 x 5 alvéoles répartis suivant un réseau carré ;
- la figure 3 est une vue de la moitié de la grille de la figure 1 vue en perspective suivant la direction nord-sud, les plaquettes ayant cette orientation étant seules représentées ;
- la figure 4, similaire à la figure 3, montre les plaquettes d'orientation est-ouest, en coupe suivant la ligne III-III de la figure 2, ainsi que les bossettes d'entretoisement de deux crayons combustibles.

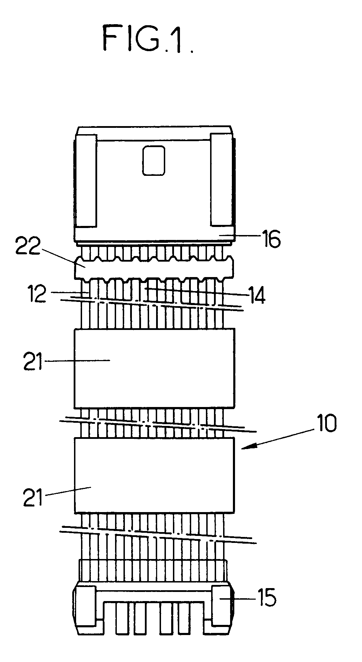

On décrira maintenant l'invention dans son application à un assemblage de combustible à réseau carré dont la constitution de principe est montrée en figure 1, utilisable dans un réacteur à eau légère sous pression. Cet assemblage 10 comporte des crayons de matériau fissile disposés aux noeuds d'un réseau à mailles carrées, remplacés en certains noeuds par des tubes-guides 12. Au centre du réseau des crayons combustibles peut être prévu un tube d'instrumentation 14.

Le squelette de l'assemblage comprend, en plus des tubes-guides 12, une pièce d'extrémité inférieure 15, une pièce d'extrémité supérieure 16 et des grilles 21 et 22 fixées à certains au moins des tubes-guides. Certaines de ces grilles, par exemple la grille extrême haute 22 placée immédiatement sous la pièce d'extrémité supérieure 16 supportent les crayons combustibles. La grille 22, étant dans une région du coeur où le flux neutronique est réduit, peut être en matériau choisi pour ses qualités de résistance mécanique et comporter des ressorts, rapportés ou constitués par déformation de plaquettes, exerçant sur chaque crayon une force qui l'applique contre un bossage prévu sur la plaquette en regard afin d'éviter le déplacement axial du crayon.

Les grilles 21 peuvent au contraire n'être prévues que pour assurer des fonctions thermo-hydrauliques et d'entretoisement (c'est-à-dire de maintien transversal des crayons) et être constituées conformément à l'invention.

Pour mieux faire apparaître les caractéristiques fondamentales d'une grille suivant l'invention, on décrira tout d'abord, à titre d'exemple, une grille qui définit un réseau de 5 x 5 alvéoles de réception de crayons ou tubes-guides, étant bien entendu qu'en règle générale une grille réelle aura beaucoup plus d'alvéoles (par exemple 17x17).

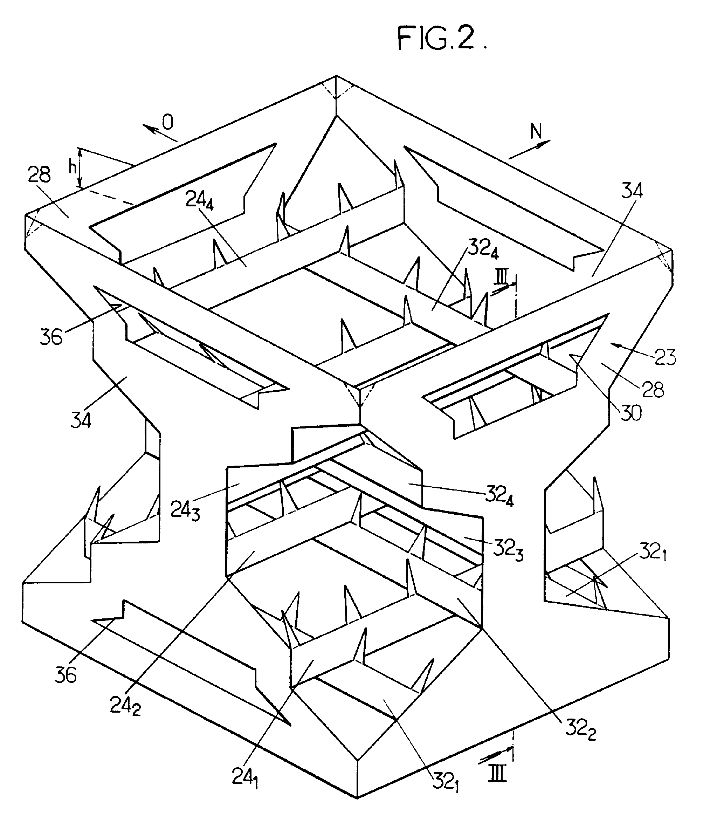

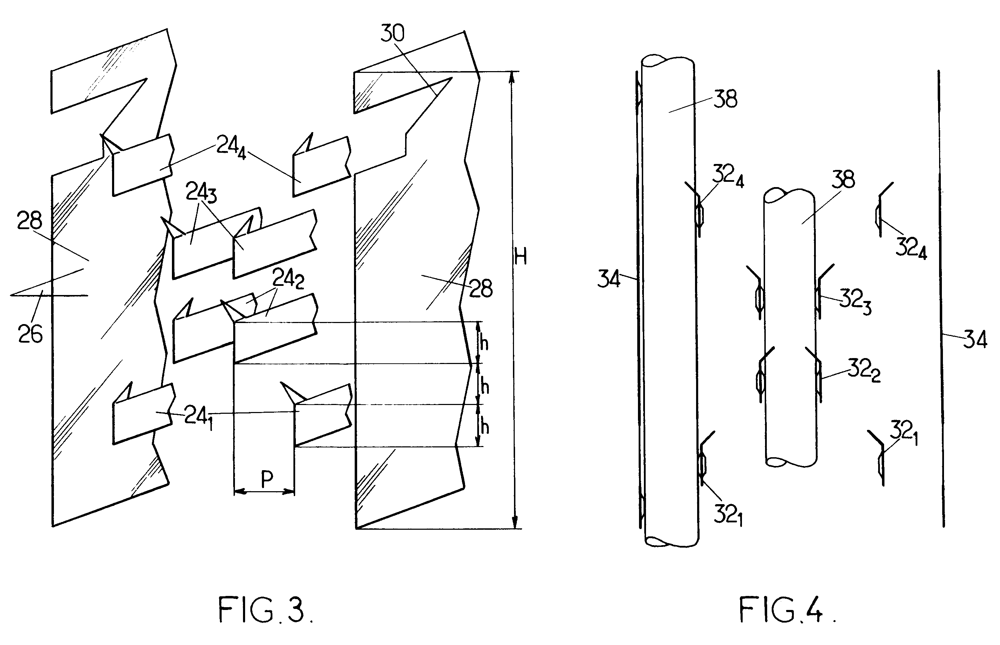

La grille montrée schématiquement en figure 2 peut être regardée comme comprenant un cadre 23 à quatre faces assurant la cohésion d'ensemble de la grille. A ce cadre sont fixés des lits successifs de plaquettes ayant deux orientations alternées, dont l'une N sera considérée comme nord-sud et l'autre 0 comme est-ouest. Les plaquettes 24 d'orientation nord-sud (figures 3 et 4) sont réparties en quatre lits et on désignera les plaquettes de ces quatre lits successifs respectivement par $24_1$, $24_2$, $24_3$ et $24_4$. Chaque lit est constitué de deux plaquettes parallèles munies d'ailettes. Les ailettes portées par les plaquettes des lits amont dans le sens de l'écoulement (c'est-à-dire des lits placés avant le plan médian 26) sont orientées de façon à défléchir les filets de réfrigérant vers l'intérieur. Au contraire, les ailettes des plaquettes $24_3$ et $24_4$ situées en aval dans le sens de l'écoulement sont munies d'ailettes destinées à défléchir l'écoulement vers l'extérieur.

Il est possible de regarder la partie haute et la partie basse de chacun des flancs 28 du cadre parallèles aux plaquettes 24 comme constituant des plaquettes extrêmes, notamment en ce qui concerne la partie terminale haute, réduite par une échancrure 30 à la largeur h commune à toutes les plaquettes.

Dans le mode de réalisation montré en figures 2 à 4, toutes les plaquettes ont la même hauteur h. Si l'intervalle laissé libre entre deux lits successifs de plaquettes 24 était également égal à h, les plaquettes $32_1$ à $32_4$ orientées est-ouest (figures 2 et 4) et de même hauteur h, seraient simplement en contact avec les plaquettes $24_1$-$24_4$ aux points de croisement. Dans un mode de réalisation avantageux, l'intervalle libre est légèrement inférieur à h de façon que les plaquettes s'enchevêtrent légèrement pour accroître la résistance mécanique.

Les parties haute et basse des flancs 34 du cadre constituent encore des plaquettes extrêmes, démunies d'ailettes. Ces plaquettes extrêmes sont séparées du reste des flancs par des échancrures 36.

Comme les plaquettes 24, les plaquettes 26 portent des ailettes orientant le réfrigérant vers l'intérieur dans la partie amont de la grille, vers l'extérieur dans la partie aval.

Pour réduire l'absorption neutronique de la grille, les flancs 28 et 34 ont avantageusement une largeur à chaque niveau juste suffisante pour porter les plaquettes correspondantes. Ainsi on constitue des brèches d'angle qui sont également favorables à la circulation de l'eau constituant réfrigérant et ralentisseur de neutrons. Les extrémités hautes et basses des arêtes d'angle peuvent être meulées pour constituer des chanfreins, comme montré par exemple en traits mixtes sur la figure 2, afin de diminuer le risque d'accrochage de grilles entre elles lors de la descente le long d'un assemblage déjà en place.

De façon générale, si le pas de répartition des plaquettes de même orientation est égal à p, la largeur L de la grille est égale à n.p dans le cas d'une grille à n cellules par côté. Sa hauteur H étant égale à 2(n+1)h, la grille a une forme approximativement cubique si p ≃ 2h. Le nombre total de plaquettes est égal à 4(n+1), c'est-à-dire double de celui des plaquettes dans les grilles traditionnelles où toutes les plaquettes sont dans le même plan.

La figure 4 montre deux crayons combustibles 38 occupant deux alvéoles dans une grille suivant l'invention. Ces crayons sont en appui contre des bossages ménagés sur les plaquettes définissant l'alvéole correspondant. Dans le cas où la grille est en un alliage de zirconium, ces bossages peuvent être constitués par déformation et éventuellement découpe partielle de la plaquette, par un procédé largement utilisé à l'heure actuelle. Alors que dans une grille actuelle un crayon n'est maintenue qu'à un seul niveau, il y a plusieurs niveaux d'entretoisement dans le cas de l'invention, comme cela est représenté sur la figure 4 ; toutefois les crayons peuvent être entretoisés dans une première direction à un premier niveau (par exemple, pour le crayon central, au niveau des plaquettes $32_3$ dans un sens, au niveau des plaquettes $32_2$ dans l'autre sens sur la figure 4).

La disposition d'ailettes montrées sur les figures 2 à 4 n'est pas la seule possible. En particulier, certaines ailettes fendues au niveau de l'entretoisement entre deux lits successifs de plaquettes peuvent être remplacées par des demi-ailettes. Certaines des ailettes placées au centre de la grille, trop proches verticalement d'ailettes d'un lit adjacent, peuvent être supprimées. On voit que la grille réalisée, ayant essentiellement une fonction thermo-hydraulique et une fonction d'entretoisement transversal, favorise le mélange des filets d'eau et augmente le débit dans les cellules centrales de l'assemblage, où le flux thermique critique risque d'être atteint en premier. Du fait que la grille n'a pas de fonction de maintien axial des crayons, il est possible de donner aux plaquettes une hauteur h nettement inférieure à celle qu'elles ont dans les grilles traditionnelles, ce qui limite l'augmentation d'absorption neutronique par rapport à une telle grille traditionnelle. Dans la pratique, il suffit d'une hauteur h de plaquette de 7 mm pour pouvoir y placer un bossage d'appui de crayons. On arrive ainsi à des grilles de forme approximativement cubique et de hauteur égale à environ la moitié de l'intervalle actuellement utilisé entre grilles successives.

Dans le cas d'un assemblage réel, par exemple d'un assemblage où les grilles définissent 17x17 alvéoles, le centre de la grille sera souvent occupé par un tube d'instrumentation occupant un espace correspondant à quatre crayons. Dans ce cas, la distance entre plaquettes nord-sud et est-ouest au centre de la grille pourra être égale à deux fois le pas des crayons: l'écoulement d'eau convergera alors non pas vers la cellule centrale, mais vers quatre cellules centrales. Avec cette disposition, la hauteur de grille sera légèrement diminuée.

L'invention est susceptible de nombreuses variantes de réalisation. En particulier, il est possible de remplacer les bossages d'entretoisement des crayons par des centreurs rapportés. La répartition des ailettes peut être différente de celle qui a été décrite, par exemple pour tenir compte de ce que certaines cellules sont traversées par des tubes-guides et non par des crayons. Les grilles suivant l'invention peuvent être utilisées seules sur une partie de la longueur d'un assemblage combustible ou elles peuvent être alternées avec des grilles de support axial des crayons dans les parties les plus chaudes d'un assemblage. Enfin, les grilles suivant l'invention peuvent s'adapter à un assemblage combustible où les crayons sont répartis aux noeuds d'un réseau rectangulaire.

## Revendications

1. Grille à ailettes mélangeuses pour assemblage combustible nucléaire ayant un faisceau de crayons de combustible, comportant plusieurs lits successifs constitués chacun de plaquettes parallèles, les plaquettes d'un lit étant croisées avec celles du lit suivant pour définir des passages de maintien des crayons aux noeuds d'un réseau régulier et toutes les plaquettes de la grille étant solidaires d'un même cadre (23), caractérisée en ce que les plaquettes de même direction sont réparties en plusieurs lits successifs, les ailettes des plaquettes ($24_1,24_2$ ; $32_1,32_2$) placées en amont du milieu de la grille étant orientées de façon à dévier l'écoulement de réfrigérant vers l'intérieur tandis que les ailettes des plaquettes ($24_3,24_4$ ; $32_3,32_4$) placées en aval du milieu de la grille sont orientées de façon à dévier l'écoulement vers l'extérieur.

2. Grille selon la revendication 1, caractérisée en ce que les lits de plaquettes ont une disposition symétrique par rapport au plan médian de la grille.

3. Grille selon la revendication 1 ou 2, caractérisée en ce que la grille a 4(n+1) plaquettes, les plaquettes terminales étant constituées par les bords haut et bas des flancs (28,34) du cadre.

4. Grille selon l'une quelconque des revendications précédentes, caractérisée en ce que les plaquettes (24,32) de deux lits successifs d'orientations différentes sont directement jointives ou présentent un emboîtement.

5. Grille selon l'une quelconque des revendications précédentes, caractérisée en ce que le cadre est constitué de flancs (28,34) évidés localement et présentant des brèches d'angle, le cadre restant continu au-delà des lits les plus en amont et en aval.

6. Grille selon l'une quelconque des revendications précédentes, caractérisée en ce que les plaquettes présentent des bossages d'appui sur les crayons (38).

7. Grille selon l'une quelconque des revendications précédentes, caractérisée en ce que les plaquettes sont en alliage à base de zirconium et ont une hauteur d'environ 7 mm.

## Patentansprüche

1. Mischgitter mit Ablenkfahnen für Brennelementkassetten mit einem Bündel von Brennstäben, die mehrere aufeinanderfolgende Schichten enthalten, jeweils bestehend aus parallelen Platten, wobei die Platten einer Schicht die der nächsten Schicht kreuzen, um Haltepassagen für die Stäbe an den Kreuzungspunkten eines gleichmäßigen Gitters zu bilden, wobei alle Platten fest mit demselben Rahmen (23) verbunden sind, **dadurch gekennzeichnet** daß die in die gleiche Richtung verlaufenden Platten auf mehrere aufeinanderfolgende Schichten verteilt sind und die Fahnen der Plat-

ten ($24_1$, $24_2$; $32_1$, $32_2$), die stromauf bezüglich der Gittermitte angeordnet sind, so ausgerichtet sind, daß sie die Strömung des Kühlmittels zum Inneren hin ablenken, während die Fahnen der Platten ($24_3$, $24_4$; $32_3$, $32_4$), die stromab der Gittermitte liegen, so ausgerichtet sind, daß sie die Strömung nach außen umlenken.

2. Mischgitter nach Anspruch 1,
dadurch gekennzeichnet,
daß die Schichten der Platten eine symmetrische Verteilung bezüglich der Mittelebene des Gitters aufweisen.

3. Mischgitter nach Anspruch 1 oder 2,
dadurch gekennzeichnet,
daß das Gitter (4(n+1) Platten aufweist, wobei die Endplatten von den oberen und unteren Rändern der Flanken (28, 34) des Rahmens gebildet werden.

4. Mischgitter nach einem der vorstehenden Ansprüche,
dadurch gekennzeichnet,
daß die Platten (24, 32) zweier auteinanderfolgender Schichten mit unterschiedlichen Orientierungen unmittelbar miteinander verbunden sind oder ineinander eingreifen.

5. Mischgitter nach einem der vorstehenden Ansprüche,
dadurch gekennzeichnet,
daß der Rahmen aus Flanken (28, 34) besteht, der stellenweise durchbrochene Kanten hat, wobei der Rahmen außerhalb dieses Bereiches in den am weitesten stromauf bzw. stromab gelegenen Bereichen geschlossen ist.

6. Mischgitter nach einem der vorstehenden Ansprüche,
dadurch gekennzeichnet,
daß die Platten Ausbeulungen zum Anliegen gegen die Stäbe (38) aufweisen.

7. Mischgitter nach einem der vorstehenden Ansprüche,
dadurch gekennzeichnet,
daß die Platten aus einer Zirconiumlegierung bestehen und eine Höhe von etwa 7 mm aufweisen.

maintaining the rods at the nodal points of a regular network and all plates of the grid being fast with a same frame (23),
characterized in that the plates having a same direction are distributed into a plurality of successive beds, the fins of those plates ($24_1$, $24_2$; $32_1$, $32_2$) which are located upstream of the mid-point of the grid being so angularly located as to deflect the coolant flow inwardly while the fins of those plates ($24_3$, $24_4$; $32_3$, $32_4$) which are located downstream of the mid-point of the grid are so angularly located as to deflect the flow outwardly.

2. Grid according to claim 1, characterized in that the beds of plates have a symmetrical arrangement with respect to a mid plane of the grid.

3. Grid according to claim 1 or 2, characterized in that the grid has 4(n+1) plates, the end plates consisting of the higher and lower sides (28,34) of the frame.

4. Grid according to any one of the preceding claims, characterized in that the plates (24,32) of two successive beds having different angular positions are in mutual contact or interfere.

5. Grid according to any one of the preceding claims, characterized in that the frame consists of sides (28,34) which are hollowed out locally and have corner gaps, the frame being continuous beyond the beds which are located beyond the upstream and downstream sides.

6. Grid according to any one of the preceding claims, characterized in that the plates have bosses bearing on the rods (38).

7. Grid according to any one of the preceding claims, characterized in that the plates are of zirconium base alloy and have an axial height of about 7 mm.

**Claims**

1. Grid with mixing fins for a nuclear fuel element having a bundle of fuel rods, comprising a plurality of successive beds each consisting of parallel plates, the plates of a bed being crossed with those of the next bed for defining passages for

# FIG.1.

# FIG.2 .

FIG.3.

FIG.4.

EP 0 349 408 B1